# EUROPÄISCHE PATENTSCHRIFT

(11) **EP 2 242 160 B1**
(45) Veröffentlichungstag und Bekanntmachung des Hinweises auf die Patenterteilung: **01.02.2012**
(21) Anmeldenummer: 09158156.1
(22) Anmeldetag: 17.04.2009
(51) Int. Cl.: H02J 3/38

(54) **Verfahren und Vorrichtung zum Zuschalten einer Photovoltaikanlage zu einem Wechselstromnetz**
Method and device for connecting a photovoltaic assembly to an alternating current network
Procédé et dispositif de commutation d'une installation photovoltaïque à un réseau de courant alternatif

(43) Veröffentlichungstag der Anmeldung: 20.10.2010
(73) Patentinhaber: SMA Solar Technology AG, 34266 Niestetal (DE)
(72) Erfinder: Falk, Andreas, 34131, Kassel (DE); Laschinski, Joachim, 34134 Kassel (DE); Reichenbächer, Wolfgang, 34355 Staufenberg (DE); Arend, Oliver, 34253 Lohfelden (DE); Greizer, Frank, 34260 Kaufungen (DE); Simon, Peter, 37235 Hessisch Lichtenau (DE)
(74) Vertreter: Rehberg Hüppe + Partner

(56) Entgegenhaltungen:
- DE-T5-112007 000 197
- JP-A- 8 126 207
- US-B2- 7 269 036

## Beschreibung

### TECHNISCHES GEBIET DER ERFINDUNG

Die Erfindung bezieht sich auf ein Verfahren zum Zuschalten einer Photovoltaikanlage zu einem Wechselstromnetz mit den Merkmalen des Oberbegriffs des unabhängigen Verfahrensanspruchs und auf eine Vorrichtung zum Durchführen eines solchen Verfahrens mit den Merkmalen des Oberbegriffs des unabhängigen Vorrichtungsanspruchs.

### STAND DER TECHNIK

Grundsätzlich könnte eine Photovoltaikanlage dauerhaft, d. h. vom Beginn bis zum Ende ihres Betriebs, mit einem Wechselstromnetz verbunden bleiben, in das von der Photovoltaikanlage erzeugte elektrische Energie eingespeist wird. Dies würde jedoch bedeuten, dass dann, wenn die Photovoltaikanlage mit zurückgehender Einstrahlung keine ausreichende Gegenspannung mehr aufbaut, Strom aus dem Wechselstromnetz bis in die Photovoltaikanlage fließen könnte. In der Folge stünde die Photovoltaikanlage beispielsweise auch des Nachts unter elektrischer Spannung. Um die Aufnahme elektrischer Energie aus dem Wechselstromnetz und den Aufbau elektrischer Spannungen an der Photovoltaikanlage des Nachts zu verhindern, hat es sich als übliche Praxis herausgebildet, Photovoltaikanlagen am Abend vom Wechselstromnetz zu trennen und diesem am Morgen wieder zuzuschalten.

Das Zuschalten einer Photovoltaikanlage zu einem Wechselstromnetz am Morgen soll zwar einerseits möglichst früh erfolgen, um möglichst frühzeitig und damit möglichst viel elektrische Energie in das Wechselstromnetz einzuspeisen. Ebenso soll die Trennung von dem Wechselstromnetz am Abend aus diesem Grund möglichst spät erfolgen. Andererseits sollen aber Zuschaltversuche, die abgebrochen werden müssen, weil die Photovoltaikanlage doch noch nicht die nötige elektrische Leistung bereitstellen kann, um in das Netz einzuspeisen, so selten wie möglich sein. Jeder erfolglose Versuch des Zuschaltens einer Photovoltaikanlage zu einem Wechselstromnetz bedeutet ein zusätzliches Schaltspiel für die Leistungsschalter, in der Regel Schütze, über die die Photovoltaikanlage mit dem Wechselstromnetz verbunden wird. Dies zwingt dazu, hochwertige Schütze einzusetzen und diese mit Leitungsschutzschaltern in Reihe zu schalten, falls solche Leitungsschutzschalter als Sicherheitsmaßnahme zwischen der Photovoltaikanlage und dem Wechselstromnetz vorgesehen werden sollen, was der Regelfall ist. Leitungsschutzschalter weisen grundsätzlich eine viel geringere Toleranz gegenüber vielen Schaltspielen auf als Schütze.

Bei den bekannten Verfahren und Vorrichtungen zum Zuschalten einer Photovoltaikanlage zu einem Wechselstromnetz nach den Oberbegriffen der unabhängigen Patentansprüche wird für den Fall, dass die von der Photovoltaikanlage generierte Gleichspannung die Zuschaltfortsetzungsmindestspannung nach dem Zuschalten zu dem Wechselstromnetz nicht weiter überschreitet, der Zuschaltungsversuch beendet und die Leistungsschalter, mit denen die Netzzuschaltung erfolgt, werden wieder geöffnet. Dabei ist die Zuschaltfortsetzungsmindestspannung häufig so gewählt, dass sie die untere Grenze für Einspeisung von elektrischer Energie von der Photovoltaikanlage in das Wechselstromnetz darstellt.

Aus der DE-T5-11 2007 000 197 ist ein Photovoltaik-Wechselrichter zum Zuschalten einer Photovoltaikanlage zu einem Wechselstromnetz nach den Oberbegriffen der unabhängigen Patentansprüche bekannt, in dem eine Tabelle mit saisonalen Werten von Zuschaltversuchmindestspannungen gespeichert ist. Wenn die von der Photovoltaikanlage generierte Gleichspannung den aktuellen saisonalen Wert der Zuschaltversuchmindestspannung erreicht, sollte ein erfolgreiches Zuschalten der Photovoltaikanlage über den Photovoltaik-Wechselrichter zum Wechselstromnetz möglich sein. Auf diese Weise können saisonale Einflüsse auf die Gleichspannung der Photovoltaikanlage berücksichtigt werden, die als Kriterium für eine ausreichende Leistungsfähigkeit der Photovoltaikanlage für einen Zuschaltversuch dient. Insbesondere beruhen diese saisonalen Einflüsse auf der Temperatur am Morgen, wenn der Zuschaltversuch unternommen wird.

Aus der US-B2-7 269 036 sind ein Verfahren und eine Vorrichtung zum Zuschalten einer Photovoltaikanlage zu einem Wechselstromnetz nach den Oberbegriffen der unabhängigen Patentansprüche bekannt, bei denen die Zuschaltzeit der Photovoltaikanlage zu dem Wechselstromnetz am Morgen abgestimmt wird, indem eine Zuschaltversuchmindestspannung erhöht wird, wenn ein vorheriger Zuschaltversuch basierend auf dem vorherigen Wert der Zuschaltversuchsmindestspannung fehlgeschlagen ist.

Bei beiden vorangehend beschriebenen Vorgehensweisen ist der grundsätzliche Konflikt zwischen der Einspeisung einer möglichst großen Menge an elektrischer Energie von der Photovoltaikanlage in das Wechselstromnetz einerseits und einer möglichst geringen Anzahl von erfolglosen Zuschaltversuchen andererseits nicht beseitigt. Entweder wird die von der Photovoltaikanlage generierte Gleichspannung, ab der am Morgen ein erster Zuschaltversuch riskiert wird, vergleichsweise niedrig gesetzt, um möglichst viel elektrische Energie von der Photovoltaikanlage in das Wechselstromnet einzuspeisen, oder er wird vergleichsweise hoch gesetzt, um die Anzahl der letztlich abzubrechenden Zuschaltversüche klein zu halten. Jede Form der Anpassung bzw. Adaptierung der Zuschaltversuchmindestspannung vermag allenfalls den Bereich besser einzugrenzen, indem dann unter beiden genannten Kriterien eine konkrete Zuschaltversuchmindestspannung festgelegt werden muss.

Aus der JP 08 126207 A ist ein Verfahren zum Zuschalten einer Photovoltaikanlage zu einem Wechselstromnetz bekannt, wobei eine von der Photovoltaikanlage generierte Gleichspannung gemessen wird, wobei bei Erreichen einer Zuschaltspannung durch die Gleichspannung ein Wechselrichter, der die Gleichspannung in eine Ausgangswechselspannung umrichtet, aktiviert und mit dem Wechselstromnetz verbunden und wobei der Wechselrichter wieder von dem Wechselstromnetz getrennt und deaktiviert wird, wenn die Gleichspannung eine Abschaltspannung unterschreitet, die über dem Scheitelwert der Netzwechselspannung liegt.

### AUFGABE DER ERFINDUNG

Der Erfindung liegt die Aufgabe zugrunde, ein Verfahren zum Zuschalten einer Photovoltaikanlage zu einem Wechselstromnetz mit den Merkmalen des Oberbegriffs des unabhängigen Verfahrensanspruchs und eine Vorrichtung zum Durchführen eines solchen Verfahrens mit den Merkmalen des Oberbegriffs des unabhängigen Vorrichtungsanspruchs aufzuzeigen, bei denen die Anzahl der auftretenden Schaltspiele der Leistungsschalter, die zum Zuschalten der Photovoltaikanlage zu dem Wechselstromnetz verwendet werden, grundsätzlich reduziert ist.

### LÖSUNG

Die Aufgabe der Erfindung wird durch ein Verfahren mit den Merkmalen des unabhängigen Verfahrensanspruchs und durch eine Vorrichtung mit den Merkmalen des nebengeordneten Vorrichtungsanspruchs gelöst. Bevorzugte Ausführungsformen des neuen Verfahrens und der neuen Vorrichtung sind in den abhängigen Patentansprüchen definiert.

### BESCHREIBUNG DER ERFINDUNG

Bei dem neuen Verfahren zum Zuschalten einer Photovoltaikanlage zu einem Wechselstromnetz wird der Wechselrichter nicht eher wieder von dem Wechselstromnetz getrennt, als dass die von der Photovoltaikanlage generierte Gleichspannung eine Abschalthöchstspannung unterschreitet, wobei diese Abschalthöchstspannung nicht unter dem Scheitelwert der Netzwechselspannung liegt und nicht über der Zuschaltfortsetzungsmindestspannung. Indem die Abschalthöchstspannung nicht unter dem Scheitelwert der Netzwechselspannung liegt, verhindert sie einen Stromfluss aus dem Wechselstromnetz über den Wechselrichter in die Photovoltaikanlage. Dabei ist die Abschalthöchstspannung vorzugsweise gleich dem Scheitelwert der Netzwechselspannung plus einen kleinen Sicherheitsaufschlag von beispielsweise 1 bis 10 %, insbesondere 3 bis 7 %, d. h. etwa 5 %. Von irgendwelchen Jahrszeiten, Temperaturen oder vorherigen Zuschaltversuchen ist die Abschalthöchstspannung bei den neuen Verfahren hingegen nicht abhängig. Da die Netzwechselspannung regelmäßig sowieso gemessen wird, kann die Abschalthöchstspannung basierend auf dem Ergebnis dieser Messung fortlaufend auf einen optimalen Wert eingestellt werden. Durch den nur kleinen Sicherheitsaufschlag der Abschalthöchstspannung auf den Scheitelwert der Netzwechselspannung liegt die Abschalthöchstspannung viel niedriger als eine von der Photovoltaikanlage bereitgestellte Gleichspannung, bei der nach dem Stand der Technik ein Zuschaltversuch nach dem bereits erfolgten Zuschalten der Photovoltaikanlage zu dem Wechselstromnetz durch erneutes Öffnen der Leistungsschalter abgebrochen wird. Bei dem neuen Verfahren tritt damit der Fall des Wiederöffnens der Schalter zum Wechselstromnetz nur selten auf. Idealervveise nur einmal am Tag, gegen Abend. Das gilt insbesondere auch dann, wenn die Zuschaltversuchmindestspannung im Interesse einer möglichst frühzeitigen Einspeisung elektrischer Energie in das Wechselstromnetz relativ klein, d. h. nicht weit über der Abschalthöchstspannung gewählt wird.

Statt mit einem Wiederöffnen der Leistungsschalter zum Wechselstromnetz reagiert das neue Verfahren auf ein Abfallen der von der Photovoltaikanlage generierten Gleichspannung in Folge ihrer noch zu geringen Leistungsfähigkeit zunächst durch Deaktivieren des mit dem Wechselstromnetz verbundenen Wechselrichters.

Diese Deaktivierung kann dann erfolgen, wenn die von der Photovoltaikanlage generierte Gleichspannung eine Mindesteinspeisungsgleichspannung unterschreitet, die über der Abschalthöchstspannung liegt und die idealer Weise so gewählt ist, dass sie auch bei aktiviertem und mit dem Wechselstromnetz verbundenem Wechselrichter eine Übertragung elektrischer Leistung aus dem Wechselstromnetz in die Photovoltaikanlage verhindert.

Statt eine Mindesteinspeisungsgleichspannung, bei deren Unterschreiten durch die von der Photovoltaikanlage generierten Gleichspannung der mit dem Wechselstromnetz verbundene Wechselrichter deaktiviert wird, so zu wählen, dass verhindert wird, dass elektrische Leistung aus dem Wechselstromnetz in den Wechselrichter fließt, kann dann, wenn eine fortlaufende Erfassung der von dem Wechselrichter abgegebenen Leistung erfolgt, für das Deaktivieren des mit dem Netz verbundenen Wechselrichters auch unmittelbar darauf abgestellt wird, dass sich die gewünschte Leistungsflussrichtung von der Photovoltaikanlage zu dem Wechselstromnetz umkehrt. Diese Ausführungsform des neuen Verfahrens ist bevorzugt.

Durch das Deaktivieren des Wechselrichters wird die Photovoltaikanlage nicht mehr durch Entnahme elektrischer Leistung belastet. Sie befindet sich damit im Leerlauf, wo es ihr, wenn sie bereits einmal die Zuschaltversuchmindestspannung erreicht hat, in aller Regel gelingt, zumindest die Abschalthöchstspannung zu halten. Nur wenn ihr selbst dies nicht gelingt, wird auch bei dem neuen Verfahren der dann bereits deaktivierte Wechselrichter von dem Wechselstromnetz getrennt.

Bei dem neuen Verfahren wird hingenommen, dass ein dem Wechselrichter typischerweise nachgeschaltetes Sinusfilter bei nur deaktivierten Wechselrichter an das Wechselstromnetz angekoppelt bleibt und Blindleistung zwischen dem Sinusfilter und dem Wechselstromnetz pendelt. Dadurch bleibt die einmal erreichte Zuschaltung über den Leistungsschalter hinweg beibehalten und für ein neuerliches Aufnehmen der Einspeisung von elektrischer Leistung in das Wechselstromnetz muss nur der Wechselrichter wieder aktiviert werden.

Zu Anfang des Zuschaltversuchs wird der noch nicht mit dem Wechselstromnetz verbundene Wechselrichter wieder deaktiviert, wenn die Gleichspannung beim Synchronisieren der Ausgangswechseispannung mit der Netzwechselspannung die Zuschaltversuchsfortsetzungsspannung unterschreitet. In diesem Fall reicht die Leistung der Photovoltaikanlage noch nicht einmal aus, die geringe Last zu tragen, die für das Synchronisieren der Ausgangswechselspannung des Wechselrichters mit der Netzwechselspannung benötigt wird. Ein derart früh abgebrochener Zuschaltversuch belastet den Leistungsschalter zum Wechselstromnetz noch nicht.

Vorzugsweise wird bei dem neuen Verfahren ein Zeitglied ausgelöst, wenn der Wechselrichter vor seinem Verbinden mit dem Wechselstromnetz oder danach deaktiviert wird und/oder der Wechselrichter vom Netz getrennt wird, wobei das Zeitglied für einen sinnvollen Zeitraum das erneute Aktivieren bzw. das erneute mit dem Netz Verbinden des Wechselrichters unterbindet.

Bei dem neuen Verfahren kann die Zuschaltversuchmindestspannung von der Jahreszeit und/oder der Temperatur der Photovoltaikanlage abhängig sein und/oder adaptiv aufgrund von Erfahrungen bei vorhergehenden Zuschaltversuchen festgelegt werden. Dabei unterscheidet sich auch eine adaptive Anpassung der Zuschaltversuchmindestspannung bei dem neuen Verfahren von dem vorliegenden Stand der Technik dadurch, dass die Anpassung auf den Erfahrungen bei dem zuletzt durchgeführten Synchronisieren der Ausgangsspannung des Wechselrichters mit der Netzwechselspannung beruht und damit auf einer nur geringen Belastung der Photovoltaikanlage, aber nicht auf Erfahrungen beim eigentlichen Schließen des Leistungsschalters zum Wechselstromnetz.

Die Zuschaltversuchmindestspannung kann aber auch fest oder in fester Abhängigkeit von der Netzwechselspannung vorgegeben werden. Dabei ist zu berücksichtigen, dass bei dem neuen Verfahren ein Zuschaltversuch nur dann tatsächlich scheitert, wenn nicht einmal das Synchronisieren der Ausgangsstellung des Wechselrichters mit der Netzwechselspannung erfolgreich ist. Danach wird der Leistungsschalter zum Wechselstromnetz geschlossen, was durch die Synchronisation lastfrei oder in der Praxis zumindest annähemd lastfrei möglich ist. Eine anschließende Belastung der Photovoltaikanlage, die zu einem Spannungsabfall führen kann, beruht ausschließlich auf der Einspeisung von elektrischer Energie von der Photovoltaikanlage in das Wechselstromnetz und kann, ohne dass es eines Wiederöffnens der Schalter zum Wechselstromnetz bedarf, durch Deaktivieren des Wechselrichters auf null zurückgeführt werden.

Durch die erhebliche Absenkung der Zahl der tatsächlich erfolgenden Schaltspiele des Leistungsschalters, der bei einem erfindungsgemäßen Verfahren die Photovoltaikanlage dem Wechselstromnetz zuschaltet, kann das Zuschalten bei dem neuen Verfahren über einen Motor getriebenen Leitungsschutzschalter erfolgen, der verglichen mit einem Schütz eine viel geringere Anzahl zulässiger Schaltspiele, d. h. eine viel geringere Lebensdauer in Schaltspielen aufweist.

Eine erfindungsgemäße Vorrichtung weist eine Steuerung auf, die den Wechselrichter nicht eher von dem Wechselstromnetz wieder trennt, als dass die mit einer Gleichspannungsmesseinrichtung erfasste Gleichspannung eine Abschalthöchstspannung unterschreitet, die die Steuerung in Abhängigkeit von dem Scheitelwert der mit einer Wechselspannungsmesseinrichtung gemessenen Netzwechselspannung generiert.

Vorzugsweise generiert die Steuerung die Abschalthöchstspannung aus dem Scheitelwert der Netzwechselspannung und einem Sicherheitsaufschlag, dessen Prozentwert in der Steuerung programmiert ist.

Weiter ist es bevorzugt, wenn die Steuerung in Abhängigkeit von einer Leistungsmesseinrichtung des Wechselrichters den mit dem Netz verbundenen Wechselrichter deaktiviert, wenn der Messwert der von dem Wechselrichter in das Netz abgegebenen Leistung kleiner als null wird.

In einer kommerziell besonders interessanten Ausführungsform der neuen Vorrichtung ist jeder Leistungsschalter, der den Wechselrichter dem Wechselstromnetz zuschaltet, ein Motor getriebener Leitungsschutzschalter. Auch wenn ein solcher Leitungsschutzschalter nur eine vergleichsweise kleine Anzahl zulässiger Schaltspiele von etwa 10.000 bis 20.000 aufweist, wird damit eine Lebensdauer der neuen Vorrichtung von weit über 20 Jahren erzielt, weil typischerweise nur ein Schaltspiel pro Tag verbraucht wird.

Vorteilhafte Weiterbildungen der Erfindung ergeben sich aus den Patentansprüchen, der Beschreibung und den Zeichnungen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: skizziert den Aufbau der neuen Vorrichtung zum Zuschalten einer Photovoltaik- anlage zu einem Wechselstromnetz in einer ersten Ausführungsform, wobei das Wechselstromnetz ein einphasiges Netz ist;
- **Fig. 2**: skizziert den Aufbau der neuen Vorrichtung für einen Fall, in dem das Wechselstromnetz ein dreiphasiges Netz ist; und
- **Fig. 3**: skizziert den Grundaufbau eines Wechselrichters der Vorrichtung gemäß Fig. 2.

### FIGURENBESCHREIBUNG

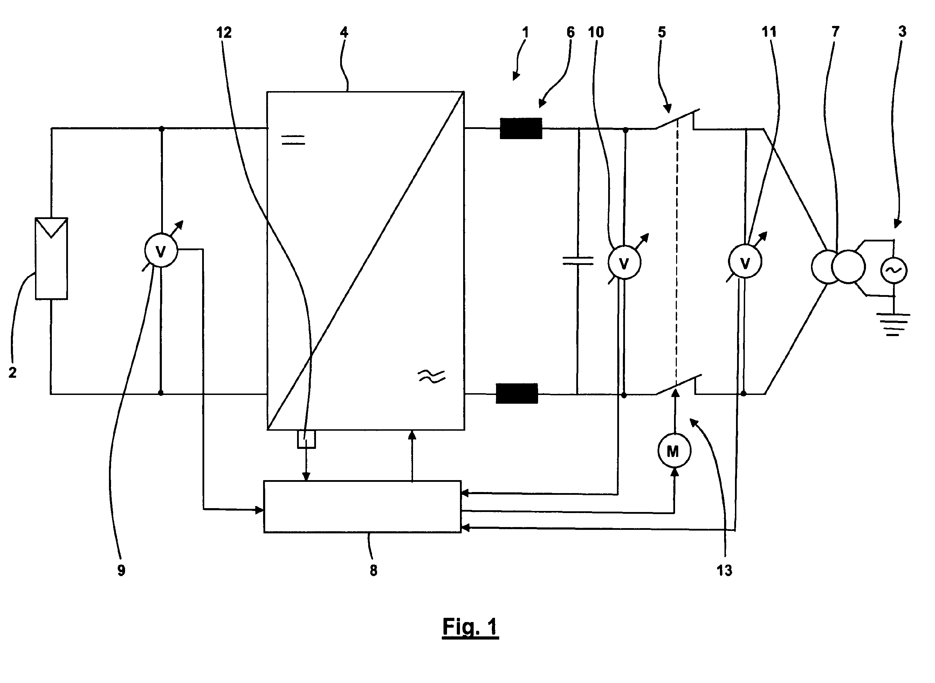

Die in **Fig. 1** skizzierte Vorrichtung 1 dient zum Zuschalten einer Photovoltaikanlage 2 zu einem Wechselstromnetz 3. Die Vorrichtung 1 weist als wesentlichen Bestandteil einen Wechselrichter 4 und einen Leistungsschalter 5 auf, wobei der Leistungsschalter 5 zwischen einem dem Wechselrichter 4 nachgeschalteten Sinusfilter 6 und einem Transformator 7 vorgesehen ist, der zur Einkopplung von elektrischer Leistung in das Wechselstromnetz 3 bei gleichzeitiger galvanischer Trennung vorgesehen ist. Der Transformator 7 kann auch entfallen. Der Wechselrichter 4 und der Leistungsschalter 5 werden von einer Steuerung 8 angesteuert. Als Eingangswerte verwendet die Steuerung 8 eine mit einer Gleichspannungsmesseinrichtung 9 gemessene Gleichspannung, die von der Photovoltaikanlage 2 generiert wird, eine Ausgangswechselspannung des Wechselrichters 4 hinter dem Sinusfilter 6, die mit einer Wechselspannungsmesseinrichtung 10 erfasst wird, eine Netzwechselspannung, die mit einer Wechselspannungsmesseinrichtung 11 erfasst wird, und die über den Wechselrichter 4 fließende elektrische Leistung, die von einer Leistungsmesseinrichtung 12 erfasst wird. Dabei werden mit den Wechselspannungsmesseinrichtungen 10 und 11 nicht nur die Beträge der jeweiligen Wechselspannungen sondern auch deren Phasen erfasst. Ausgehend von einer Situation bei Nacht, in der die Photovoltaikanlage 2 keine Gleichspannung generiert und der Leistungsschalter 5 geöffnet ist, so dass die Vorrichtung 1 im Wesentlichen spannungsfrei ist, wird jetzt die Funktion der Vorrichtung 1 und insbesondere diejenige ihrer Steuerung 8 erläutert. Bis die Gleichspannung, die mit der Spannungsmesseinrichtung 9 erfasst wird, eine Zuschaltversuchmindestspannung erreicht hat, bleibt der Wechselrichter 4 deaktiviert und der Leistungsschalter 5 offen. Wenn diese Zuschaltversuchmindestspannung erreicht ist, aktiviert die Steuerung 8 den Wechselrichter 4 bei zunächst weiter geöffnetem Leistungsschalter 5. Anschließend synchronisiert die Steuerung 8 durch entsprechende Ansteuerung des Wechselrichters 4 die Ausgangswechselspannung, die mit der Wechselspannungsmesseinrichtung 10 erfasst wird, hinsichtlich Betrag und Phase mit der Netzwechselspannung, die mit der Wechselspannungsmesseinrichtung 11 erfasst wird. Dabei wird die von der Photovoltaikanlage 2 generierte Gleichspannung darauf überwacht, dass sie bei der resultierenden geringen Entnahme elektrischer Leistung aus der Photovoltaikanlage 2 über einer Zuschaltfortsetzungsmindestspannung bleibt. Ist dies nicht der Fall, wird der Zuschaltversuch abgebrochen und nach einem festgelegten Zeitraum unter denselben Bedingungen erneut gestartet. Bricht die von der Photovoltaikanlage 2 generierte Gleichspannung nicht ein, so schließt die Steuerung 8 den Leistungsschalter 5 und verbindet den Wechselrichter 5 so mit dem Wechselstromnetz 3. Dies geschieht aufgrund der Synchronisation der Ausgangswechselspannung mit der Netzwechselspannung zumindest nahezu leistungsflussfrei, d. h. es stellt keine zusätzliche Belastung der Photovoltaikanlage 2 dar. Eine solche zusätzliche Belastung ergibt sich erst anschließend, wenn mit der Steuerung 8 der Wechselrichter 4 so angesteuert wird, dass die elektrische Leistung von der Photovoltaikanlage 2 in das Wechselstromnetz 3 eingespeist wird. Diese elektrische Leistung wird mit der Leistungserfassungseinrichtung 12 erfasst. Wenn die Leistungsfähigkeit der Photovoltaikanlage 2 - aus welchen Gründen auch immer - so weit zurückgeht, dass keine Leistung mehr von der Photovoltaikanlage 2 über den Wechselrichter 4 in das Wechselstromnetz 3 eingespeist werden kann, deaktiviert die Steuerung 8 den Wechselrichter 4. Sie hält aber den Leistungsschalter 5 geschlossen. Nur wenn der Scheitelwert der Netzwechselspannung, die mit der Wechselspannungsmesseinrichtung 11 erfasst wird, verglichen mit der verbleibenden Gleichspannung, die von der Photovoltaikanlage 2 generiert wird, so groß ist, dass die Gefahr eines Stromflusses über den Wechselrichter 4 in die Photovoltaikanlage 2 besteht, öffnet die Steuerung 8 den Leistungsschalter 5. Dies ist in der Regel nur am Abend der Fall, wenn die Einstrahlung auf die Photovoltaikanlage 2 so weit zurückgeht, dass diese für die Nacht vom Wechselstromnetz 3 getrennt werden sollte. Die Abschalthöchstspannung, bei deren Unterschreiten durch die von der Photovoltaikanlage 2 generierte Gleichspannung der Leistungsschalter 5 geöffnet wird, wird von der Steuerung 8 typischerweise als der Scheitelwert der Netzwechselspannung plus ein prozentualer Sicherheitsaufschlag von beispielsweise 5 % festgelegt. Im Normalfall wird der Leistungsschalter 5 daher am Tag nur ein einziges Mal geöffnet und geschlossen, d. h. mit nur einem einzigen Schaltspiel belastet. Aufgrund dieser geringen Belastung mit Schaltspielen kann der Leistungsschalter 5 wie hier als Motor getriebener Leitungsschutzschalter 13 ausgebildet sein und damit zugleich Leitungsschutzfunktion erfüllen.

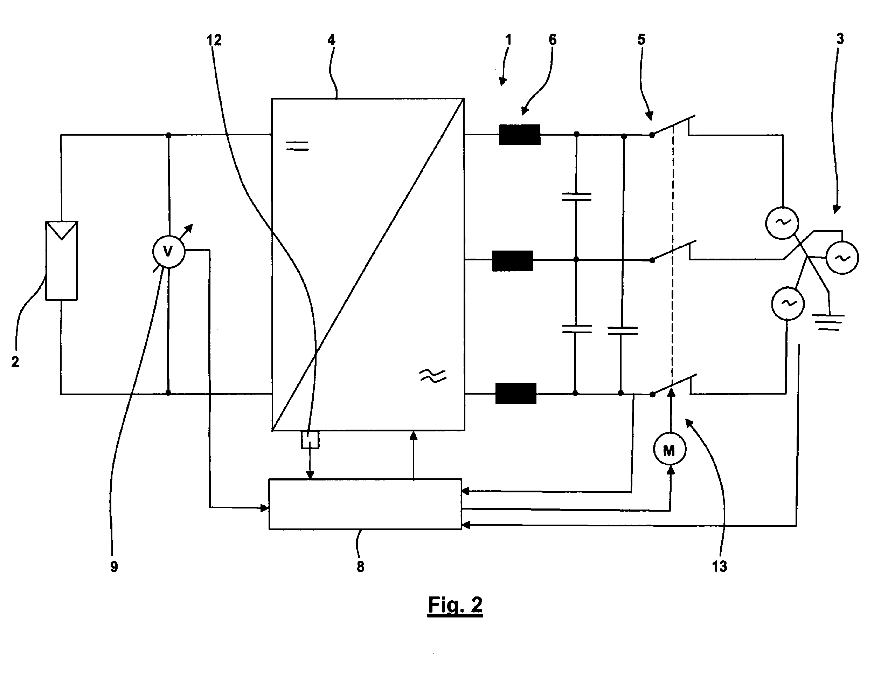

Die Ausführungsform der Vorrichtung 1 gemäß **Fig. 2** unterscheidet sich nur darin von der Ausführungsform gemäß Fig. 1, dass der Wechselrichter 4 hier die elektrische Energie von der Photovoltaikanlage 2 in ein dreiphasiges Wechselstromnetz 3 einspeist und dabei kein Transformator zwischen dem Leistungsschalter 5 und dem Wechselstromnetz 3 vorgesehen ist. Hier kann auch ein Dreiphasentransformator vorzugsweise ein Mittelspannungstransformator vorgesehen werden. Die Wechselspannungsmesseinrichtungen 10 und 11 sind nur der Übersichtlichkeit halber weggelassen und auch hier grundsätzlich vorhanden. Für die Ausbildung der Vorrichtung 1 kommt es auf die Details des Wechselrichters 4 und auch des Sinusfitters 6 sowie der Photovoltaikanlage 2 und selbst des Wechselstromnetzes 3 nicht an. Weiter können auch zusätzliche Schaltungs- und Schutzelemente wie Schalter, Überspannungsableiter und Sicherungen zwischen der Photovoltaikanlage 2 und dem Wechselrichter 4 und/oder Hochsetz-/Tiefsetzsteller und dgl. vorhanden sein.

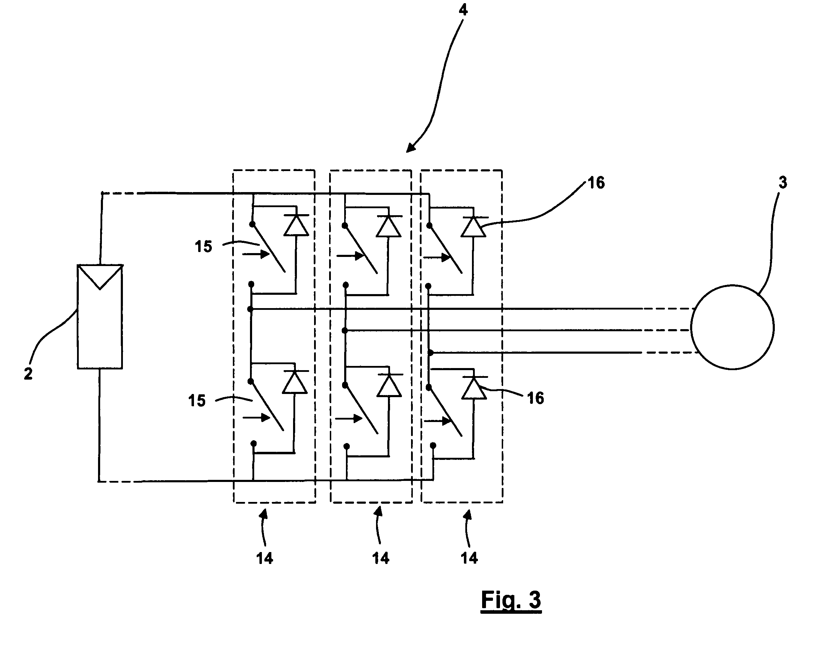

**Fig. 3** skizziert einen möglichen Grundaufbau des Wechselrichters 4 gemäß Fig. 2. Dieser weist drei Halbbrücken 14 auf, über die jeweils eine Phase des dreiphasigen Wechselstromnetzes wechselweise mit den beiden Polen der von der Photovoltaikanlage 2 generierten Gleichspannung kontaktiert wird. Jede Halbbrücke 14 ist aus zwei getakteten Schaltern 15 aufgebaut, denen jeweils eine Freilaufdiode 16 parallel geschaltet ist. Über diese Freilaufdioden 16 kann grundsätzlich Strom von dem Wechselstromnetz 3 in Gegenrichtung zu der Photovoltaikanlage 2 fließen, solange der Wechselrichter 4 an das Wechselstromnetz angeschlossen ist, selbst wenn er nicht aktiviert ist, d. h. seine Schalter 15 nicht getaktet werden sondern dauerhaft offen sind. Dieser potentielle Stromfluss bei einem Wechselrichter mit Freilaufdioden wird bei der vorliegenden Erfindung dadurch verhindert, dass der Wechselrichter 4 dann wieder von dem Wechselstromnetz 3 abgetrennt wird, wenn die von der Photovoltaikanlage 2 generierte Gleichspannung dem Scheitelwert der Netzwechselspannung nahekommt.

### BEZUGSZEICHENLISTE

- 1: Vorrichtung
- 2: Photovoltaikanlage
- 3: Wechselstromnetz
- 4: Wechsetrichter
- 5: Leistungsschalter
- 6: Sinusfilter
- 7: Transformator
- 8: Steuerung
- 9: Gleichspannungsmesseinrichtung
- 10: Wechselspannungsmesseinrichtung
- 11: Wechselspannungsmesseinrichtung
- 12: Leistungsmesseinrichtung
- 13: Leitungsschutzschalter
- 14: Halbbrücke
- 15: getakteter Schalter
- 16: Freilaufdiode

## Patentansprüche

1. Verfahren zum Zuschalten einer Photovoltaikanlage (2) zu einem Wechselstromnetz, wobei eine von der Photovoltaikanlage (2) generierte Gleichspannung gemessen wird, wobei bei Erreichen einer Zuschaltversuchmindestspannung durch die Gleichspannung ein Wechselrichter (4), der die Gleichspannung in eine Ausgangswechselspannung umrichtet, aktiviert wird, wobei die Ausgangswechselspannung mit einer Netzwechselspannung des Wechselstromnetzes (3) synchronisiert wird und wobei der Wechselrichter (4) mit dem Wechselstromnetz (3) verbunden wird, wenn die Synchronisation erfolgt ist und die Gleichspannung eine Zuschaltfortsetzungsmindestspannung weiter überschreitet, die genauso groß ist wie oder kleiner ist als die Zuschaltversuchmindestspannung, **dadurch gekennzeichnet, dass** beim Abfallen der von der Photovoltaikanlage (2) generierten Gleichspannung der mit dem Wechselstromnetz verbundene Wechselrichter (4) zunächst deaktiviert wird, wenn die Gleichspannung eine Mindesteinspeisungsgleichspannung unterschreitet, und der deaktivierte Wechselrichter (4) erst dann wieder von dem Wechselstromnetz (3) getrennt wird, wenn die Gleichspannung bei deaktiviertem Wechselrichter (4) eine Abschalthöchstspannung unterschreitet, die genauso groß ist wie oder größer ist als der Scheitelwert der Netzwechselspannung, so dass ein Stromfluss aus dem Wechselstromnetz (3) in die Photovoltaikanlage (2) verhindert wird, und genauso groß ist wie oder kleiner ist als die Zuschaltfortsetzungsmindestspannung.

2. Verfahren nach Anspruch 1, **dadurch gekennzeichnet, dass** die Abschalthöchstspannung gleich dem Scheitelwert der Netzwechselspannung plus einen Sicherheitsaufschlag ist.

3. Verfahren nach Anspruch 2, **dadurch gekennzeichnet, dass** der Sicherheitsaufschlag 1 bis 10 % des Scheitelwerts der Netzwechselspannung beträgt.

4. Verfahren nach einem der Ansprüche 1 bis 3, **dadurch gekennzeichnet, dass** die Mindesteinspeisungsgleichspannung größer als die Abschalthöchstspannung ist.

5. Verfahren nach einem der Ansprüche 1 bis 4, **dadurch gekennzeichnet, dass** der mit dem Wechselstromnetz (3) verbundene Wechselrichter (4) deaktiviert wird, wenn elektrische Leistung aus dem Wechselstromnetz (3) in den Wechselrichter (4) fließt.

6. Verfahren nach einem der Ansprüche 1 bis 5, **dadurch gekennzeichnet, dass** der noch nicht mit dem Wechselstromnetz (3) verbundene Wechselstromrichter (4) deaktiviert wird, wenn die Gleichspannung beim Synchronisieren der Ausgangswechselspannung mit der Netzwechselspannung die Zuschaltfortsetzungsmindestspannung unterschreitet.

7. Verfahren nach einem der Ansprüche 1 bis 6, **dadurch gekennzeichnet, dass** ein Zeitglied ausgelöst wird, wenn der Wechselrichter (4) deaktiviert wird und/oder der Wechselrichter (4) von dem Wechselstromnetz (3) getrennt wird, wobei das Zeitglied für einen bestimmten Zeitraum das erneute Aktivieren bzw. das erneute Verbinden des Wechselrichters (4) mit dem Wechselstromnetz unterbindet.

8. Verfahren nach einem der Ansprüche 1 bis 7, **dadurch gekennzeichnet, dass** der Wechselrichter (4) über mindestens einen motorisch schaltbaren Leitungsschutzschalter (13) mit dem Wechselstromnetz (3) verbunden wird.

9. Vorrichtung zum Zuschalten einer Photovoltaikanlage (2) zu einem Wechselstromnetz (3) mit einer Gleichspannungsmesseinrichtung (9) zum Messen einer von der Photovoltaikanlage (2) generierten Gleichspannung, mit einer Steuerung (8), die so ausgeführt ist, dass sie dann, wenn die gemessene Gleichspannung eine Zuschaltversuchmindestspannung erreicht, einen Wechselrichter (4) aktiviert, der die Gleichspannung in eine Ausgangswechselspannung umrichtet, mit einer ersten Wechselspannungsmesseinrichtung (10) für die Ausgangswechselspannung, mit einer zweiten Wechselspannungsmesseinrichtung (11) für die Netzwechselspannung des Wechselstromnetzes (3), wobei die Steuerung (8) so ausgeführt ist, dass sie die Ausgangswechselspannung mit der Netzwechselspannung synchronisiert, und mit mindestens einem Leistungsschalter (5), um den Wechselrichter (4) mit dem Wechselstromnetz (3) zu verbinden, nachdem die Synchronisation erfolgt ist, wobei die Steuerung (8) so ausgeführt ist, dass sie den Leistungsschalter (5) nur dann schließt, wenn die Gleichspannung eine Zuschaltfortsetzungsmindestspannung weiter überschreitet, die genauso groß ist wie oder kleiner ist als die Zuschaltversuchmindestspannung, **dadurch gekennzeichnet, dass** die Steuerung (8) so ausgeführt ist, dass sie beim Abfallen der von der Photovoltaikanlage (2) generierten Gleichspannung den mit dem Wechselstromnetz verbundenen Wechselrichter (4) zunächst deaktiviert und den deaktivierten Wechselrichter (4) erst dann wieder von dem Wechselstromnetz (3) trennt, wenn die Gleichspannung bei deaktiviertem Wechselrichter (4) eine Abschalthöchstspannung unterschreitet, die die Steuerung (8) genauso groß wie den oder um einen Sicherheitsaufschlag, dessen Wert in der Steuerung (8) programmiert ist, größer als den Scheitelwert der Netzwechselspannung festlegt.

10. Vorrichtung nach Anspruch 9, **dadurch gekennzeichnet, dass** der Wert des Sicherheitsaufschlags als Prozentwert in der Steuerung (8) programmiert ist.

11. Vorrichtung nach Anspruch 9 oder 10, **dadurch gekennzeichnet, dass** eine Leistungsmesseinrichtung (12) für die von dem Wechselrichter (4) in das Netz fließende elektrische Leistung vorgesehen ist, und dass die Steuerung (8) den mit dem Netz verbundenen Wechselrichter (4) deaktiviert, wenn die elektrische Leistung, die von dem Wechselrichter (4) in das Netz fließt, negativ wird.

12. Vorrichtung nach einem der Ansprüche 9 bis 11, **dadurch gekennzeichnet, dass** der Leistungsschalter (5) ein Motor getriebener Leitungsschutzschalter (13) ist.

13. Vorrichtung nach einem der Ansprüche 9 bis 12, **dadurch gekennzeichnet, dass** der Leistungsschalter (5) eine maximale Anzahl zulässiger Schaltspiele von nicht mehr als 20.000 aufweist.

## Claims

1. Method of connecting a photovoltaic device (2) to an AC power grid, wherein a DC voltage generated by the photovoltaic device (2) is measured, wherein upon the DC voltage reaching a minimum connection attempt voltage an inverter (4), which converts the DC voltage into an AC output voltage, is activated, wherein the AC output voltage is synchronized with the AC grid voltage of the AC power grid (3), and wherein the inverter (4) is connected to the AC power grid (3), when the synchronization has been achieved and the DC voltage still exceeds a minimum connection continuation voltage that is smaller than or as high as the minimum connection attempt voltage, **characterized in that** upon a decrease of the DC voltage generated by the photovoltaic device (2) the inverter (4) connected to the AC power grid (3) is at first deactivated, when the DC voltage falls below a minimum DC feeding voltage, and the deactivated inverter (4) is disconnected only from the AC power grid (3) again when the DC voltage with deactivated inverter (4) falls below a maximum shut-down voltage that is higher than or at least as high as the peak value of the AC grid voltage, so that a current flow out of the AC power grid (3) into the photovoltaic device (2) is avoided, and smaller than or as high as the minimum connection attempt voltage.

2. Method of claim 1, **characterized in that** the maximum shut-down voltage is equal to the peak value of the AC grid voltage plus an added safety margin.

3. Method of claim 2, **characterized in that** the added safety margin is between 1 and 10 % of the peak value of the AC grid voltage.

4. Method of any of the claims 1 to 3, **characterized in that** the minimum DC feeding voltage is higher than the maximum shut-down voltage.

5. Method of any of the claims 1 to 4, **characterized in that** the inverter (4) connected to the AC power grid (3) is deactivated when electric power flows out of the AC power grid (3) into the inverter (4).

6. Method of any of the claims 1 to 5, **characterized in that** the inverter (4) that is not yet connected to the AC power grid (3) is deactivated when the DC voltage falls below the minimum connection continuation voltage during synchronization of the AC output voltage with the AC grid voltage.

7. Method of any of the claims 1 to 6, **characterized in that** a timing element is triggered when the inverter (4) is deactivated and/or the inverter (4) is disconnected from the AC power grid (3), wherein the timing element avoids reactivation or reconnection of the inverter (4) with the AC power grid for a certain period of time, respectively.

8. Method of any of the claims 1 to 7, **characterized in that** the inverter (4) is connected to the AC power grid (3) via at least one motor-driven line safety switch (13).

9. Apparatus for connecting a photovoltaic device (2) to an AC power grid (3) comprising a DC voltage measurement device (9) for measuring a DC voltage generated by the photovoltaic device (2), a controller (8) that is made so as to activate an inverter (4), which converts the DC voltage into an AC output voltage, when the measured DC voltage reaches a minimum connection attempt voltage, a first AC voltage measurement device (10) for the AC output voltage, a second AC voltage measurement device (11) for the AC grid voltage of the AC power grid (3), wherein the controller (8) is made so as to synchronize the AC output voltage with the AC grid voltage, and at least one power switch (5) for connecting the inverter (4) to the AC power grid (3) after the synchronization has been achieved, wherein the controller (8) is made so as to close the power switch (5) only if the DC voltage still exceeds a minimum connection continuation voltage that is smaller than or at least as high as the minimum connection attempt voltage, **characterized in that** the controller (8) is made so as, upon a decrease of the DC voltage generated by the photovoltaic device (2), to at first deactivate the inverter (4) that is connected to the DC power grid and to only disconnect the deactivated inverter (4) from the DC power grid (3) when the DC voltage with deactivated inverter (4) falls below a maximum shut-down voltage that is set by the controller (8) to be as high as or by an added safety margin, whose value is programmed in the controller (8), higher than the peak value of the AC grid voltage.

10. Apparatus of claim 9, **characterized in that** the value of the added safety margin is programmed in the controller (8) as a percentage.

11. Apparatus of claim 9 or 10, **characterized in that** a power measurement device (12) is provided for the electric power flowing from the inverter (4) into the grid, and that the controller (8) deactivates the inverter (4) connected to the grid when the electric power that flows from the inverter (4) into the grid gets negative.

12. Apparatus of any of the claims 9 to 11, **characterized in that** the power switch (5) is a motor-driven line safety switch (13).

13. Apparatus of any of the claims 9 to 12, **characterized in that** the power switch (5) comprises a maximum number of allowable switching cycles of not more than 20,000.

## Revendications

1. Procédé pour le raccordement d'une installation photovoltaïque (2) à un réseau de courant alternatif, une tension continue, générée par l'installation photovoltaïque (2), étant mesurée, un onduleur (4), qui redresse la tension continue en une tension alternative de sortie, étant activé lorsque la tension continue atteint une tension minimale d'essai de raccordement, la tension alternative de sortie étant synchronisée avec une tension alternative du réseau de courant alternatif (3) et l'onduleur (4) étant relié au réseau de courant alternatif (3) lorsque la synchronisation est aboutie et la tension continue continue à passer au-dessus d'une tension minimale de prolongement du raccordement, qui est égale ou inférieure à la tension minimale d'essai de raccordement, **caractérisé en ce que**, en cas de chute de la tension continue générée par l'installation photovoltaïque (2), l'onduleur (4), relié au réseau de courant alternatif, est d'abord désactivé lorsque la tension continue passe en dessous d'une tension continue d'alimentation minimale, et l'onduleur (4) désactivé est séparé à nouveau du réseau de courant alternatif (3) seulement lorsque, en présence de l'onduleur (4) désactivé, la tension continue passe en dessous d'une tension maximale de déconnexion qui est égale ou supérieure à la valeur de crête de la tension alternative du réseau, de manière à empêcher que le courant circule à partir du réseau de courant alternatif (3) vers l'installation photovoltaïque (2), et qui est égale ou inférieure à la tension minimale de prolongement du raccordement.

2. Procédé selon la revendication 1, **caractérisé en ce que** la tension maximale de déconnexion est égale à la valeur de crête de la tension alternative du réseau plus un supplément de sécurité.

3. Procédé selon la revendication 2, **caractérisé en ce que** le supplément de sécurité représente 1 à 10 % de la valeur de crête de la tension alternative du réseau.

4. Procédé selon l'une quelconque des revendications 1 à 3, **caractérisé en ce que** la tension continue d'alimentation minimale est supérieure à la tension maximale de déconnexion.

5. Procédé selon l'une quelconque des revendications 1 à 4, **caractérisé en ce que** l'onduleur (4), relié au réseau de courant alternatif (3), est désactivé lorsque la puissance électrique circule à partir du réseau de courant alternatif (3) vers l'onduleur (4).

6. Procédé selon l'une quelconque des revendications 1 à 5, **caractérisé en ce que** l'onduleur (4), encore relié au réseau de courant alternatif (3), est désactivé lorsque la tension continue passe en dessous de la tension minimale de prolongement du raccordement lors de la synchronisation de la tension alternative de sortie avec la tension alternative du réseau.

7. Procédé selon l'une quelconque des revendications 1 à 6, **caractérisé en ce qu'**un relais de temporisation est déclenché lorsque l'onduleur (4) est désactivé et/ou lorsque l'onduleur (4) est séparé du réseau de courant alternatif (3), ledit relais de temporisation empêchant pendant un intervalle de temps déterminé que l'onduleur (4) soit réactivé ou soit à nouveau relié au réseau de courant alternatif.

8. Procédé selon l'une quelconque des revendications 1 à 7, **caractérisé en ce que** l'onduleur (4) est relié au réseau de courant alternatif (3) par l'intermédiaire d'au moins un disjoncteur de protection de circuit (13) commutable par un moteur.

9. Dispositif pour le raccordement d'une installation photovoltaïque (2) à un réseau de courant alternatif (3), comportant un dispositif de mesure de la tension continue (9) pour mesurer une tension continue générée par l'installation photovoltaïque (2), comportant une commande (8) qui est configurée de telle sorte que, lorsque la tension continue mesurée atteint une tension minimale d'essai de raccordement, elle active un onduleur (4) qui redresse la tension continue en une tension alternative de sortie, comportant un premier dispositif de mesure de la tension alternative (10) pour la tension alternative de sortie, comportant un deuxième dispositif de mesure de la tension alternative (11) pour la tension alternative du réseau de courant alternatif (3), ladite commande (8) étant configurée pour synchroniser la tension alternative de sortie avec la tension alternative du réseau, et comportant au moins un disjoncteur de puissance (5) pour relier l'onduleur (4) au réseau de courant alternatif (3) une fois que la synchronisation est aboutie, ladite commande (8) étant configurée de telle sorte qu'elle ferme le disjoncteur de puissance (5) uniquement lorsque la tension continue continue à passer au-dessus d'une tension minimale de prolongement du raccordement, qui est égale ou inférieure à la tension minimale d'essai de raccordement, **caractérisé en ce que** la commande (8) est configurée de telle sorte que, en cas de chute de la tension continue générée par l'installation photovoltaïque (2), elle désactive d'abord l'onduleur (4), relié au réseau de courant alternatif, et le sépare à nouveau du réseau de courant alternatif (3) seulement lorsque, en présence de l'onduleur (4) désactivé, la tension continue passe en dessous d'une tension maximale de déconnexion que la commande (8) définit comme étant égale à la valeur de crête de la tension alternative du réseau ou supérieure à ladite valeur de crête d'un supplément de sécurité dont la valeur est programmée dans la commande (8).

10. Dispositif selon la revendication 9, **caractérisé en ce que** la valeur du supplément de sécurité est programmée dans la commande (8) sous la forme d'une valeur de pourcentage.

11. Dispositif selon la revendication 9 ou 10, **caractérisé en ce qu'**il est prévu un dispositif de mesure de la puissance (12) pour la puissance électrique circulant à partir de l'onduleur (4) vers le réseau, et **en ce que** la commande (8) désactive l'onduleur (4) relié au réseau lorsque la puissance électrique, circulant à partir de l'onduleur (4) vers le réseau, devient négative.

12. Dispositif selon l'une quelconque des revendications 9 à 11, **caractérisé en ce que** le disjoncteur de puissance (5) est un disjoncteur de protection de circuit (13) actionné par un moteur.

13. Dispositif selon l'une quelconque des revendications 9 à 12, **caractérisé en ce que** le disjoncteur de puissance (5) comporte un nombre maximum de jeux de commutation autorisés, qui ne dépasse pas 20 000.
